# EUROPEAN PATENT SPECIFICATION

(11) **EP 1 398 928 B1**
(45) Date of publication and mention of the grant of the patent: **08.02.2006**
(21) Application number: 02020674.4
(22) Date of filing: 13.09.2002
(51) Int. Cl.: H04L 25/14, H04L 1/18, H04L 1/00

(54) **Method for parallel transmission of data frames employing an independent stop & wait ARQ protocol for every channel allowing the reordering of data frames in the receiver**
Verfahren zur parallelen Übertragung von Datenrahmen mittels unabhängiger stop & wait Protokolle für jeden Kanal, was die empfangseitige Neuordnung der Datenrahmen erlaubt
Procédé pour la transmission en parallèle de trames de données utilisant des protocoles ARQ arrêt-attente indépendants pour chaque canal qui permet de réordonner les trames dans le récepteur

(43) Date of publication of application: 17.03.2004
(73) Proprietor: WINBOND ELECTRONICS CORPORATION, Hsinchu (TW)
(72) Inventor: Su, Tsan-Kuang, Lin 18, Rande Li, Lujou City, Taipei 247 (TW)
(74) Representative: Goddar, Heinz J.

(56) References cited:
- US-A- 6 021 124
- US-A1- 2002 075 842
- US-A1- 2002 093 937

## Description

### FIELD OF THE INVENTION

The present invention is relative to a multi channels data transmission control method, which recovers received data by an acknowledgement record matrix.

### BACKGROUND OF THE INVENTION

In a general TDMA (Time Division Multiple Access) system (just like GSM, DECT), multiple time slots can be used at the same time to transfer data for enhancing the transmission rate; but the reflected data flow control would be more complex. For example, by the way of Sequence Number, receiver will recover the data by the sequence number of every data segment, so the overhead of data, buffer size, and operating speed should be limited.

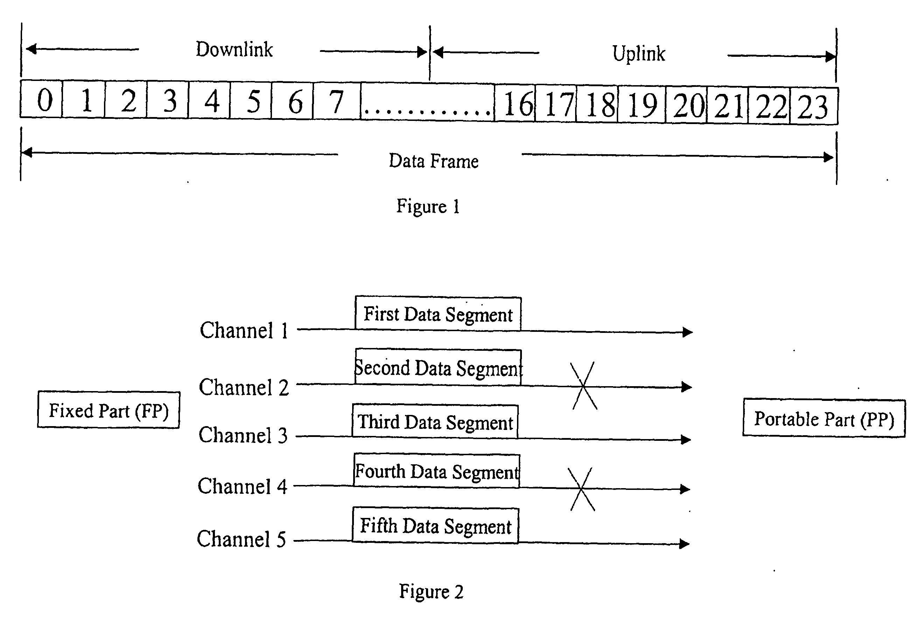

Fig. 1 is a traditional DECT system. There are 24 time slots in one data frame: the first half is downlink (from FP (Fixed Part) to PP (Portable Part)), and the second half is uplink (from PP to FP). In general, a PP would create a single channel with an FP, for example, using the pair of (Slot 2, Slot 14) time slots. But for high data transmission purpose, we may create N channels between a PP and a FP; that is, we may enhance the transmission rate via using 2N time slots concurrently. So, the data of FP will be partitioned into several units by the base of a time slot's size, and be transferred via N channels sequentially; and so does PP. But the flow control would become more and more difficult.

Fig. 2 shows a traditional multi channels transmission from a FP to a PP. If there are 5 channels existed in one data frame concurrently, then the data transmission rate will be enhanced by 5 times. But if channel 1, 3, 5 transfer data successfully and channel 2 and 4 don't, then how can a PP manage the received data segments is a very important topic.

US Patent No.6021124 provides a similar solution: pushing data segments into every channel's FIFO (First In, First Out) stack and transferred by every channel respectively. For example, there are 10 data segments numbered by 0, 1, 2, 3, 4, 5, 6, 7, 8, 9, and there are 5 channels for data transferred; the arrangements are: Channel 1 transfers segment 0 and 5, Channe 12 transfers segment 1 and 6, Channel 3 transfers segment 2 and 7, Channel 4 transfers segment 3 and 8, and Channel 5 transfers segment 4 and 9. If Channel 2 fails, then segment 6 cannot be transferred until segment 1 transferred completely; but if segment 1 always cannot be transferred, then all the data queued in Channel 2 cannot be transferred to receipt end. This will affect the data transmission rate.

### SUMMARY OF THE INVENTION

The object of the present invention is, based on the drawback of above skill and provides a new solution to solve the data receiving sequence problem of receipt end, decrease the amount of transferred data overhead effectively, enhance the data transmission rate, and decrease the calculating demand of receipt end. Furthermore, we may commit flexible transmission rate to make system maintenance more robust, and commit all the extension requirements of TDMA system.

For above purpose, we provide a multi channels data transmission control method, and whose procedures are listed as below:
Provide multiple channels and channel counters with the same number, these channels have multiple data frames;
Based on these channels and data frames to generate an acknowledgement record matrix;
Partition data into several segments;
Arrange every data segment into every channel's frame sequentially and check the transferring status of previous frame of respective channel. If the transferring status of previous frame is incomplete, then skip this channel and arrange this segment into next one's frame.

If the transferring status of a channel's frame becomes complete, then the respective channel counter should be increased by 1;

Record the transferring status of these channels' frames into acknowledgement record matrix;

And then, receive data by this acknowledgement record matrix and reflective channel's counters.

In accordance with one aspect of the present invention, if the transferring status of previous frame is incomplete for a frame, then the data segment of the previous frame has to reload into this frame and transfer again.

In accordance with one aspect of the present invention, the first row of acknowledgement record matrix all be set to "1".

In accordance with one aspect of the present invention, all the data of the matrix from the second row should be set to "1" after the status of reflective channels' frames are complete, and the data of matrix should be set to "0" if the status of reflective channels' frames are incomplete.

In accordance with one aspect of the present invention, the channels' counters should be increased by 1 after the reflective data segments of frames are transferred completely, and the receipt end will receive these data segments when the reflective counters are not 0.

In accordance with one aspect of the present invention, the way to determine the frame transmission is complete or not is based on the acknowledged signal from receipt end.

The present invention provides another multi channels data transmission control method, which is progressed at the transferred end and listed as below:
Arrange the first data segment into the first data frame of the first channel;
Arrange the second data segment into the first data frame of the second channel;
Check the first data frame of the first channel, arrange the third data segment into the second data frame of the first channel after the first data frame of the first channel is transferred completely, or arrange the third data segment into the second data frame of the second channel if the first data frame of the first channel is transferred incompletely.

In accordance with one aspect of the present invention, the way to determine the frame transmission is complete or not is based on the acknowledged signal from receipt end.

The present invention provides another multi channels data transmission control method, which is progressed at the receipt end and listed as below:
Allocate the first sign into the first row of an acknowledgement record matrix;
Increase the first channel counter by 1 after the first data frame of the first channel receives data completely and allocate the first sign into the matrix's first column of the second row, or allocate the second sign into the matrix's first column of the second row if the first data frame of the first channel does not receive data completely; and
Increase the second channel counter by 1 after the first data frame of the second channel receives data completely and allocate the first sign into the matrix's second column of the second row, or allocate the second sign into the matrix's second column of the second row if the first data frame of the second channel does not receive data completely.

In accordance with one aspect of the present invention, the way to determine the frame receiving is complete or not is responding an acknowledged signal to transferring end.

In accordance with one aspect of the present invention, the first sign is "1" and the second sign is "0".

The present invention may best be understood through the following description with reference to the accompanying drawings, in which:

### BRIEF DESCRIPTION OF THE DRAWINGS

Fig. 1 is a traditional TDMA (Time Division Multiple Access) system;
Fig. 2 is a traditional multi channels transmission from FP to PP;
Fig. 3 is a diagram for data transfer according to the present invention;
Fig. 4(a) is a diagram showing the 5 channels according to the present invention;
Fig. 4(b) is a diagram showing the receiving queue according to the present invention;
Fig. 4(c) is a diagram showing the Acknowledgement Record Matrix according to the present invention;
Fig. 5(a) is a diagram showing the channel selecting flow according to the present invention;
Fig. 5(b) is a diagram showing the number of every channel's counter (or queue size) at the receipt end according to the present invention; and
Fig. 5(c) is a diagram showing the recovery of receiving queues according to the present invention.

### DETAILED DESCRIPTION OF THE PREFERRED EMBODIMENT

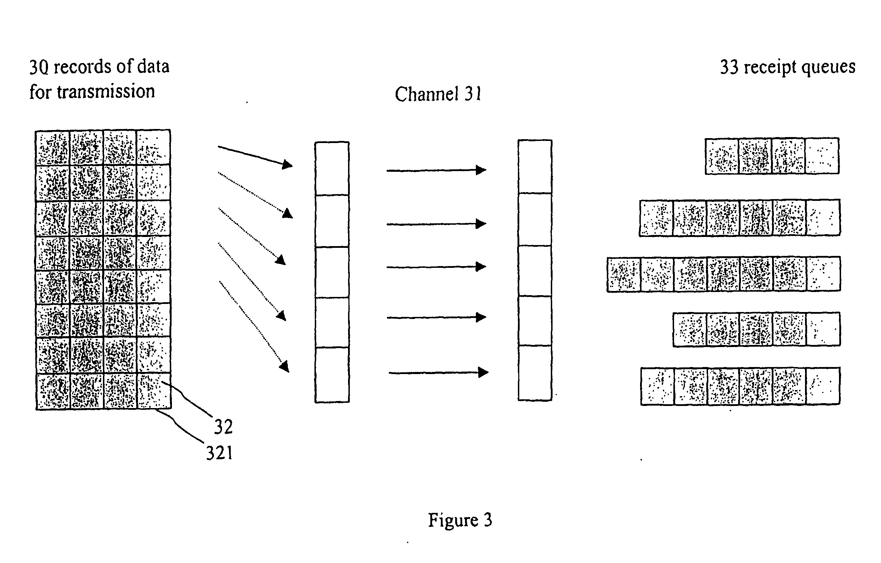

Fig. 3 shows the data transmission example according to the present invention. In our system, Channel 31 is set to be a kind of resource. Whenever the transmission end (TX) will transfer data, then TX has to search a vacant channel sequentially; if Channel 31 is vacant, then Segment 32 would occupy this channel and will not release it until this segment is transferred completely. If the segment cannot be transferred completely, then this channel will re-transfer it by next data frame and never stop until transferring completely. When TX end receives an acknowledged signal Ack from receipt end (RX), then TX will release the channel because the previous segment is transferred completely. So, the data that will be transferred from FP to PP will be arranged into vacant channels sequentially, and this is the only one transferring rule of TX end. But sometimes Channel 31 has to re-transfer data due to transferring error, so the Received-Queue 33 of the 5 channels at the RX end will be messy and the sequences of received segments will be involute.

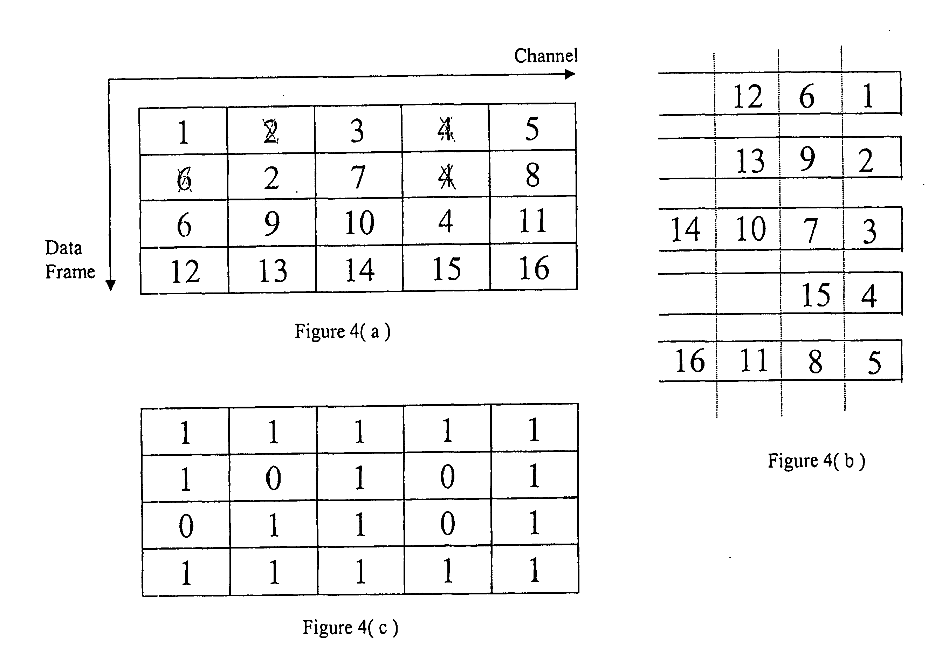

Fig. 4(a) shows the 5 channels according to the present invention. If we generate 5 channels concurrently, then the x-axis means different channels, the y-axis means sequential frames, and the numbers in squares means the sequence of transferred segments. The value of square is X would mean transferring error, and the same channel of next frame has to re-transfer the same segment. For example, if Channel 2 of Frame 1 transfers data incompletely, then Channel 2 of Frame 2 still has to transfer Segment 2 again; and all the fourth channels of Frame 1, Frame 2, and Frame 3 would transfer Segment 4. So, from Fig. 4(a) we may know the complete progress of system's data transmission and we may understand the data segments of received queues, just like Fig. 4(b). For RX end, data segments cannot be transferred to the higher layer until the sequences of segments are correct.

In fact, the reason why the segments can occupy channels and be transferred is, TX end receives an Ack signal from RX end and releases the channels. So the RX end could predict the transmission sequences from TX.

From the first row of Fig. 4(a) and the second row of Fig. 4(c), we may find that.Fig. 4(c) just records the values into 1 if Ack signals are received, and records the values into 0 if Ack signals are not received. So we may generate a matrix by recording the progress of Ack signals' transmitting from RX end, just likes Fig. 4(c). And we called this matrix as Ack Record Matrix, which also means the useable time stamp of TX end's channels. In this Fig., the values of Ack Record Matrix's first row are all 1 because the 5 channels all are vacant at the beginning.

Mapping Fig. 4(c) to Fig. 4(b), we may find that Ack Record Matrix can recover the sequences of received data segments. For example, when Segment6 of Queue 1 has received, then we have to skip to Queue 2 for receiving Segment 7; mapping to Ack Record Matrix, the value of Matrix[2,1] is 1 means Segment 6 has to be received from Queue 1, the value of Matrix[2,2] is 0 means ignore, and the value of Matrix[2,3] is 1 means Segment 7 has to be received from Queue 3, and so on.

Furthermore, every received queue has to own its counter to record the current number of legal data segments in the queue. For example, after Frame 1 is finished, the counters' values of the 5 queues are 1, 0, 1, 0, 1, respectively. Based on Ack Record Matrix, we receive Segment 1 from Queue 1 firstly, which counter value is 1 means Segment 1 is allocated in the queue. Then receiving Segment 2 from Queue 2, but the counter value is 0 means Segment 2 has not arrived, so we cannot receive Segment 2 until Frame 2 gets it and counter value is not 0. And so on.

So the Ack Record Matrix just tells us which queue to receive data, but the counter value of queue tells us the data have arrived to be received or not.

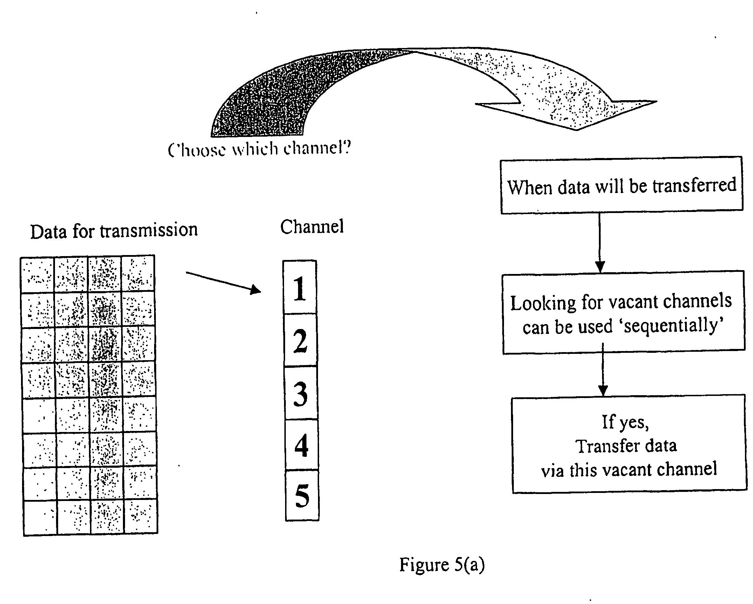

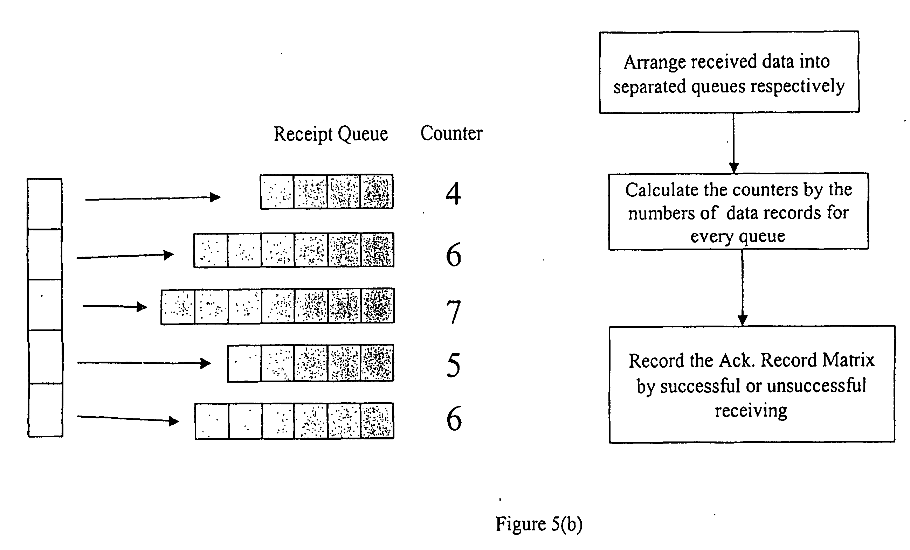

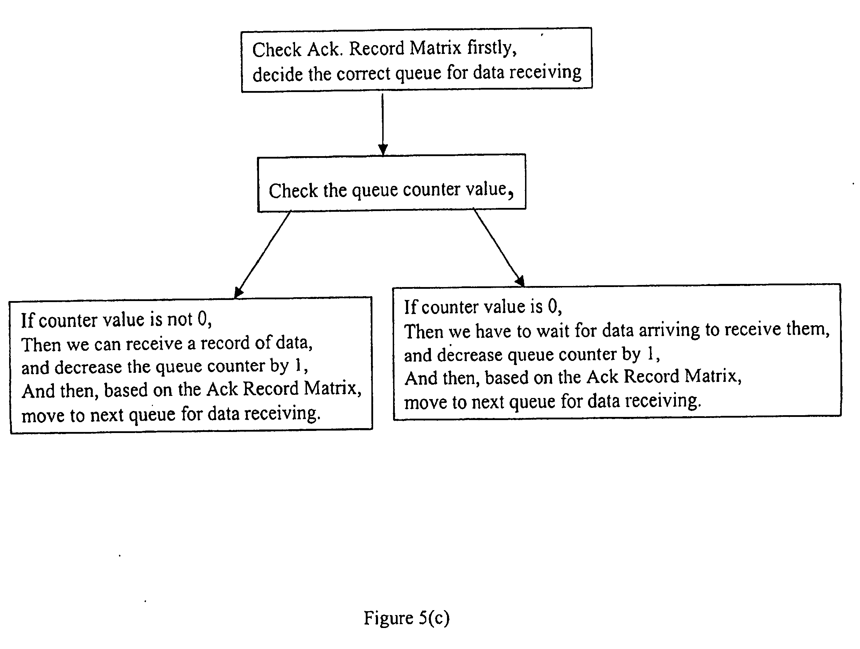

Fig. 5(a) shows the channels selection progress according to the present invention example. Whenever arranging a segment into a channel, we may check the acknowledgement signal of previous transferring segment to certify the channel is vacant or not. If the Ack signal has been received, then this channel is vacant (data have been transferred completely); if the Ack signal has not been received, then this channel is occupied (data transmission has not completed). If the channel is vacant, then we can arrange a new segment into this channel for transmission; if the channel is occupied, then selecting next vacant channel to transfer this segment.

Fig. 5(b) shows the data segments' amounts of every channel (or queue) at the receipt end according to the present invention. Every channel has its reflected receiving queue and counter. When a channel's segment has received completely, the segment will be pushed into the reflected queue, the channel counter will be increased by 1, and the reflected address in Ack Record Matrix will be set to "1". If a channel's frame is not received completely, then the reflected receiving queue will not be increased, the channel counter will not be increased, and the reflected address in Ack Record Matrix will be set to "0".

Fig. 5(c) shows the data recovery of received queue according to the present invention. Before recovering the data, the records in Ack Record Matrix have to be checked firstly to decide the correct received queue for data receiving. Secondly check the counters' value: if value is not 0, then receive the data from reflected queue, decrease the counter value by 1, and receive data from next queue; if value is 0, then waiting for the data arrive at the queue for receiving.

This contrivance can complete the whole flow control without any sequence number, and Ack Record Matrix can commit any transmission rate. For example, the numbers of Ack Record Matrix's columns are the maximal channels' numbers in the system, which is set to N. If a service requests only N-2 channels, then the size of Ack Record Matrix does not need to modify and just insert "0" into those mapping idle channels of the matrix.

To sum up, this contrivance includes below advantages:
1. This contrivance can complete the flow control without any sequence number, which effectively decreases the overhead of transmission.
2. Receipt end can recovery all the data segments by Ack Record Matrix only, which enhances transmission rate and reduces the requirement for operating ability of RX end.
3. The design of Ack Record Matrix can commit any transmission rate, which provides high flexibility for system maintenance.
4. This contrivance can save the received buffer size. For example, a constant size received buffer can be partitioned for 2 or 3 channels by simple memory management program. This contrivance manages received queues by link-listed strategy, so the reception of all channels will not be effected if the throughput of a channel reduces due to congestion.
5. This contrivance can commit all TDMA systems.

The present invention controls data segments reception by recording every segment's acknowledgement signal in the Ack Record Matrix and counting at the received queue, which is a brand new contrivance with improvement, practicability, and concession.

While the invention has been described in terms of what are presently considered to be the most practical and preferred embodiments, it is to be understood that the invention need not be limited to the disclosed embodiment. On the contrary, it is intended to cover various modifications and similar arrangements included within the scope of the appended claims.

The features disclosed in the foregoing description, and/or in the accompanying drawings may, both separately and in any combination thereof, be material for realising the invention in diverse forms thereof as long as they fall within the scope of the appended claims.

## Claims

1. A multi channel data transmission control method comprising steps of:
providing multiple channels and channel counters each of which corresponds to one of the multiple channels, said channels having multiple data frames;
generating an acknowledgement record matrix having cells containing transfering states corresponding to said data frames of said channels;
partitioning a data into several segments;
arranging said segments into said data frames sequentially for data transmission and checking for each segment a transferring status of the previous frame of its respective channel,
if said transferring status of said previous frame of the respective channel indicates that the corresponding segment was received with an error, then skipping said channel and arranging said segment into a data frame of the next channel;
if said transferring status of said previous data frame of the respective channel indicates that the corresponding segment was received without errors, then increasing the channel counter of the respective channel by 1;
recording said transferring status of said data frames of said channels into the corresponding cells of said acknowledgement record matrix; and
receiving said data according said acknowledgment record matrix and said respective channel counter.

2. A method according to Claim 1 further comprising the step of, if said transferring status of said previous frame of the respective channel indicates that the corresponding segment was received with an error, then reloading said segment of said previous frame into the current data frame and transferring it again.

3. A method according to Claim 1 or 2 wherein a plurality of data of a first row of said acknowledgement record matrix are all set to "1".

4. A method according to any of the preceding claims wherein the step of recording said transferring status of said data frames of said channels into the respective cells of said acknowledgment record matrix comprises setting the data at the respective cell of said acknowledgement record matrix to "1" if said transferring status of said data frame of the respective channel indicates that the corresponding segment was received without errors, and setting said data of said acknowledgement record matrix to "0" if said transferring status of said frame of the respective channel indicates that the corresponding segment was received with an error, for all rows of said acknowledgement record matrix except for the first row.

5. A method according to any of the preceding claims wherein a channel counter is increased by 1 if a segment of a data frame is transferred without errors, and said segment is taken for further procesing from a queue if said channel counter is greater or equal to 1.

6. A method according to any of the preceding claims wherein said transferring status is generated according to an acknowledge signal from a receipt end.

## Patentansprüche

1. Steuerverfahren zur Datenübertragung in mehreren Kanälen, das folgende Schritte aufweist:
Bereitstellen mehrerer Kanäle und Kanalzähler, von denen jeder einem der mehreren Kanäle entspricht, wobei die Kanäle mehrere Datenrahmen aufweisen;
Erzeugen einer Bestätigungsaufzeichnungsmatrix mit Zellen, die Übertragungszustände entsprechend der Datenrahmen der Kanäle aufweisen;
Aufteilen von Daten in einzelne Segmente;
sequentielles Anordnen der Segmente in die Datenrahmen zur Datenübertragung und Überprüfen eines Übertragungszustandes des vorhergehenden Rahmens seines jeweiligen Kanals für jedes Segment,
falls der Übertragungszustand des vorhergehenden Rahmens des jeweiligen Kanals anzeigt, daß das entsprechende Segment fehlerhaft empfangen wurde, Überspringen des Kanals und Einordnen des Segments in einen Datenrahmen des nächsten Kanals;
falls der Übertragungszustand des vorhergehenden Datenrahmens des entsprechenden Kanals anzeigt, daß das entsprechende Segment fehlerhaft empfangen wurde, Erhöhen des Kanalzählers des jeweiligen Kanals um 1;
Aufzeichnen des Übertragungszustandes der Datenrahmen der Kanäle in den entsprechenden Zellen der Bestätigungsaufzeichnungsmatrix; und
Empfangen der Daten entsprechend der Bestätigungsaufzeichnungsmatrix und des jeweiligen Kanalzählers.

2. Verfahren nach Anspruch 1, das weiterhin den Schritt umfaßt: falls der Übertragungszustand des vorhergehenden Rahmens des jeweiligen Kanals anzeigt, daß das entsprechende Segment fehlerhaft empfangen wurde, erneutes Laden des Segments des vorhergehenden Rahmens in den aktuellen Datenrahmen und wiederholtes Übertragen von ihm.

3. Verfahren nach Anspruch 1 oder 2, bei dem mehrere Daten einer ersten Reihe der Bestätigungsaufzeichnungsmatrix alle auf "1" gesetzt werden.

4. Verfahren nach einem der vorhergehenden Ansprüche, bei dem der Schritt zum Aufzeichnen des Übertragungszustandes der Datenrahmen der Kanäle in den entsprechenden Zellen der Bestätigungsaufzeichnungsmatrix das Setzen der Daten in der entsprechenden Zelle der Bestätigungsaufzeichnungsmatrix auf "1" umfaßt, falls der Übertragungszustand des Datenrahmens des jeweiligen Kanals anzeigt, daß das entsprechende Segment fehlerfrei empfangen wurde, und Setzten der Daten der Bestätigungsaufzeichnungsmatrix auf "0", falls der Übertragungszustand des Rahmens des jeweiligen Kanals anzeigt, daß das entsprechende Segment fehlerhaft empfangen wurde, für alle Zeilen der Bestätigungsaufzeichnungsmatrix außer für die erste Zeile.

5. Verfahren nach einem der vorhergehenden Ansprüche, bei dem ein Kanalzähler um 1 erhöht wird, falls ein Segment eines Datenrahmens fehlerfrei übertragen wird, und das Segment zur weiteren Verarbeitung aus einer Queue genommen wird, falls der Datenzähler größer oder gleich 1 ist.

6. Verfahren nach einem der vorhergehenden Ansprüche, bei dem der Übertragungszustand entsprechend eines Bestätigungssignals von einem Empfängerende erzeugt wird.

## Revendications

1. Procédé de commande de transmission multivoie de données, comprenant les étapes consistant à :
prévoir des voies multiples et des compteurs de voies, chacun correspondant à l'une des voies multiples, lesdites voies comportant des trames de données multiples ;
produire une matrice d'enregistrement d'accusé de réception, comportant des cellules contenant des états de transfert, correspondant auxdites trames de données desdites voies ;
partager une donnée en plusieurs segments ;
disposer lesdits segments dans lesdites trames de données, successivement pour une transmission de données, et vérifier, pour chaque segment, un état de transfert de la trame précédente de sa voie respective ;
si ledit état de transfert de ladite trame précédente de la voie respective indique que le segment correspondant a été reçu avec une erreur, sauter alors ladite voie et disposer ledit segment dans une trame de données de la voie suivante ;
si ledit état de transfert de ladite trame précédente de données de la voie respective indique que le segment correspondant a été reçu sans erreurs, augmenter alors de 1 le compteur de voie de la voie respective ;
enregistrer ledit état de transfert desdites trames de données desdites voies dans les cellules correspondantes de ladite matrice d'enregistrement d'accusé de réception ; et
recevoir lesdites données en fonction de ladite matrice d'enregistrement d'accusé de réception et dudit compteur de voie respectif.

2. Procédé selon la revendication 1, comprenant en outre l'étape consistant, si ledit état de transfert de ladite trame précédente de la voie respective indique que le segment correspondant a été reçu avec une erreur, à recharger alors ledit segment de ladite trame précédente dans la trame actuelle de données, et à la transférer de nouveau.

3. Procédé selon la revendication 1 ou 2, dans lequel une pluralité de données d'une première rangée de ladite matrice d'enregistrement d'accusé de réception sont toutes mises à "1".

4. Procédé selon l'une quelconque des revendications précédentes, dans lequel l'étape d'enregistrement dudit état de transfert desdites trames de données desdites voies dans les cellules respectives de ladite matrice d'enregistrement d'accusé de réception comprend la mise à "1" des données au niveau de la cellule respective de ladite matrice d'enregistrement d'accusé de réception, si ledit état de transfert de ladite trame de données de la voie respective indique que le segment correspondant a été reçu sans erreurs, et la mise à "0" desdites données de ladite matrice d'enregistrement d'accusé de réception, si ledit état de transfert de ladite trame de la voie respective indique que le segment correspondant a été reçu avec une erreur, pour toutes les rangées de ladite matrice d'enregistrement d'accusé de réception, sauf la première rangée.

5. Procédé selon l'une quelconque des revendications précédentes, dans lequel un compteur de voie est augmenté de 1 si un segment d'une trame de données est transféré sans erreurs, et ledit segment est prélevé dans une file d'attente, pour une poursuite du traitement, si ledit compteur de voie est supérieur ou égal à 1.

6. Procédé selon l'une quelconque des revendications précédentes, dans lequel ledit état de transfert est produit en fonction d'un signal d'accusé de réception, provenant d'une extrémité réceptrice.
